# FASCICULE DE BREVET EUROPEEN

(11) **EP 0 922 606 B1**
(45) Date de publication et mention de la délivrance du brevet: **14.05.2003**
(21) Numéro de dépôt: 98403090.8
(22) Date de dépôt: 08.12.1998
(51) Int. Cl.: B60N 2/00, B60N 2/08

(54) **Agencement de siège amovible et réglable en position longitudinale dans un habitacle de véhicule automobile**
Anordnung für einen ausnehmbaren und in Längsrichtung verstellbaren Sitz im Innenraum eines Kraftfahrzeuges
Arrangement for a removable and logitudinaly adjustable seat inside an automotive vehicle

(30) Priorité: 12.12.1997 FR 9715799
(43) Date de publication de la demande: 16.06.1999
(73) Titulaire: AUTOMOBILES PEUGEOT, 75116 Paris (FR); AUTOMOBILES CITROEN, 92200 Neuilly-sur-Seine (FR)
(72) Inventeur: Roque, Philippe, 95210 Saint-Gratien (FR)
(74) Mandataire: Lanceplaine, Jean-Claude

(56) Documents cités:
- EP-A- 0 609 130
- US-A- 5 368 355

## Description

La présente invention a pour objet un agencement de siège réglable en position longitudinale dans un habitacle de véhicule automobile et amovible afin de libérer de la place ou modifier la répartition des sièges dans le véhicule automobile.

On connaît déjà dans l'état de la technique, des agencements de siège de ce type dans lesquels le siège comporte des pieds de support disposés par exemple à l'avant et à l'arrière de l'assise du siège et qui sont destinés à permettre la fixation du siège sur le reste de la structure du véhicule.

C'est ainsi, par exemple, que l'on connaît des sièges dans lesquels les pieds sont destinés à prendre appui sur des doigts ou des anneaux transversaux portés par le plancher du véhicule et qui sont munis de verrous désarmables d'accrochage sur ces doigts ou ces anneaux.

Des sièges de ce type sont, par exemple, utilisés dans les véhicules du type monocorps et les sièges sont donc amovibles.

Ces agencements de siège ont été perfectionnés pour permettre un réglage de leur position longitudinale dans l'habitacle du véhicule.

C'est ainsi, par exemple, que l'on connaît du document EP-A-0 609 130, un tel siège dans lequel les doigts ou anneaux sont fixés à un élément mobile monté coulissant dans une glissière longitudinale fixée au plancher du véhicule et dans lequel l'élément mobile contient des moyens de retenue longitudinale de cet élément sur la glissière, ces moyens étant dégageables par action sur des moyens de commande prévus sur le siège.

On connaît également dans le document US-A-5 368 355 (correspondant au préambule de la revendication indépendante), un siège qui comporte des roues de guidage dans des rails fixés sur le plancher du véhicule et deux doigts de positionnement et de verrouillage déplaçables par des moyens de commande prévus sur le siège.

On conçoit alors que dans ces sièges, les moyens de commande étant prévus sur ceux-ci alors que les moyens de retenue longitudinale de l'élément sur la glissière sont associés à celle-ci, et que le siège est amovible et peut être séparé des glissières, il convient de prévoir des moyens de liaison spécifiques entre le siège et les glissières afin d'assurer la commande de ces moyens de retenue longitudinale.

Ceci présente un certain nombre d'inconvénients, notamment au niveau de la structure relativement complexe d'un tel agencement et de la sécurité des occupants.

On connaît dans l'état de la technique selon l'article 54(3) CBE, le document EP-A-904975 qui décrit un agencement de siège du type comportant des pieds de support munis de moyens d'ancrage montés à coulissement dans des profilés complémentaires de guidage reliés au plancher et dont certains au moins comporte des moyens d'immobilisation en position longitudinale du siège, déplaçables par des moyens de commande portés par le siège, entre des positions active d'immobilisation du siège et escamotée de réglage en position de celui-ci.

L'invention a donc pour objet un agencement de siège amovible et réglable en position longitudinale dans un habitacle de véhicule automobile, le siège comportant des pieds de support munis, à une extrémité, de moyens d'ancrage montés à coulissement dans des profilés complémentaires de guidage reliés au plancher du véhicule et dont certains au moins comportent des moyens d'immobilisation en position longitudinale du siège sur le plancher, déplaçables sous l'action de moyens de commande portés par le siège entre des positions active d'immobilisation dudit siège et escamotée permettant le réglage en position de celui-ci, caractérisé en ce que les moyens d'ancrage sont extractibles des profilés pour permettre un retrait du siège et en ce que les moyens d'ancrage sont formés par deux galets disposés symétriquement par rapport au pied et entre lesquels est interposé un organe formant came monté pivotant sous l'action des moyens de commande sur un axe transversal supportant lesdits galets et déplaçable entre une première position active d'écartement des galets et une seconde position escamotée permettant le rapprochement de ces galets sous l'action d'un organe de rappel élastique,

Selon d'autres caractéristiques de l'invention,
- les moyens d'immobilisation sont formés par un doigt porté par l'organe formant came et adapté pour coopérer avec des moyens de butée complémentaires ménagés dans le fond du profilé correspondant,
- l'organe formant came comporte une butée d'appui dans le fond du profilé correspondant et un orifice axial de forme oblongue de passage de l'axe transversal permettant le déplacement de cet organe formant came entre lesdites positions à l'encontre d'un organe élastique interposé entre l'axe et la paroi dudit orifice,
- les faces en regard de l'organe formant came et des galets comportent des parties en relief coopérant les unes avec les autres pour maintenir les galets en position d'écartement dans la première position de cet organe formant came et chaque face dudit organe formant came en regard des galets comporte au moins une partie en creux adaptée pour coopérer avec les parties en relief de ces galets pour le rapprochement desdits galets dans la seconde position de l'organe formant came,
- les profilés présentent chacun la forme générale d'un U dont les extrémités des branches latérales comportent des bords de butée en regard délimitant entre eux une fente de passage des pieds et des galets en position rapprochée,
- l'axe transversal est formé par un tube et l'organe de rappel élastique maintenant les galets en position rapprochée est formé par un ressort disposé à l'intérieur du tube et dont chaque extrémité est reliée à un desdits galets.

Les caractéristiques et avantages de l'invention apparaîtront au cours de la description qui va suivre, donnée à titre d'exemple et faite en référence aux dessins annexés, sur lesquels :
- la Fig. 1 est une vue schématique de côté d'un premier mode de réalisation d'un agencement de siège de véhicule automobile, conforme à l'invention,
- la Fig. 2 est une vue schématique en coupe transversale d'un pied du siège en position de maintien de ce siège sur le plancher du véhicule,
- la Fig. 3 est une vue en coupe selon la ligne 3-3 de la Fig. 2,
- la Fig. 4 est une vue schématique en coupe transversale d'un pied du siège en position d'extraction de ce siège du plancher du véhicule,
- la Fig. 5 est une vue en coupe transversale selon la ligne 5-5 de la Fig. 4,
- la Fig. 6 est une vue schématique de côté d'un second mode de réalisation d'un agencement de siège de véhicule automobile, conforme à l'invention.

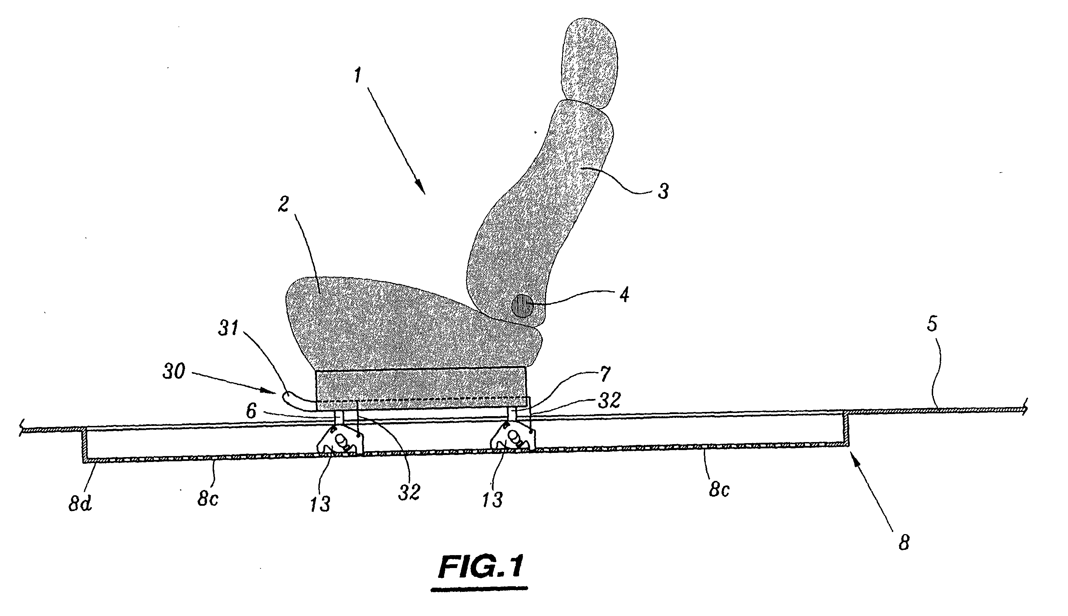

Sur la Fig. 1, on a représenté schématiquement un siège de véhicule automobile, désigné dans son ensemble par le référence 1 et qui comporte, de manière classique, une assise 2 et un dossier 3 monté pivotant sur ladite assise 2 autour d'un axe horizontal 4 pour permettre le réglage du dossier 3 en fonction de la morphologie du passager et pour permettre également le basculement de ce dossier 3 sur l'assise 2.

Le siège 1 est monté réglable en position longitudinale sur le plancher 5 du véhicule automobile et peut être retiré de ce véhicule automobile.

Pour cela, le siège 1 comporte deux pieds avant 6 de support et deux pieds arrière 7 de support, les deux pieds avant 6 et les deux pieds arrière 7 étant disposés symétriquement par rapport à l'axe longitudinal du siège 1.

Le plancher 5 du véhicule automobile est équipé de deux profilés parallèles 8 s'étendant parallèlement à l'axe longitudinal du véhicule automobile.

L'écartement entre les deux profilés 8 correspond à l'écartement transversal entre les deux pieds avant 6 et les deux pieds arrière 7 du siège 1 et la longueur desdits profilés 8 correspond à la longueur du coulissement de ce siège 1 à obtenir.

Les profilés 8 peuvent être intégrés dans le plancher 5 du véhicule automobile, comme représenté sur les figures, ou fixés sur ledit plancher 5.

D'une manière générale, les pieds de support 6 et 7 sont munis, à une extrémité, de moyens d'ancrage montés à coulissement dans les profilés 8 et certains au moins de ces pieds 6 et 7 comportent des moyens d'immobilisation en position longitudinale du siège 1 sur le plancher 5, déplaçables sous l'action de moyens de commande 30 portés par le siège 1 entre des positions active d'immobilisation dudit siège 1 et escamotée permettant le réglage en position de celui-ci et les moyens d'ancrage sont extractibles des profilés 8 pour permettre un retrait du siège 1.

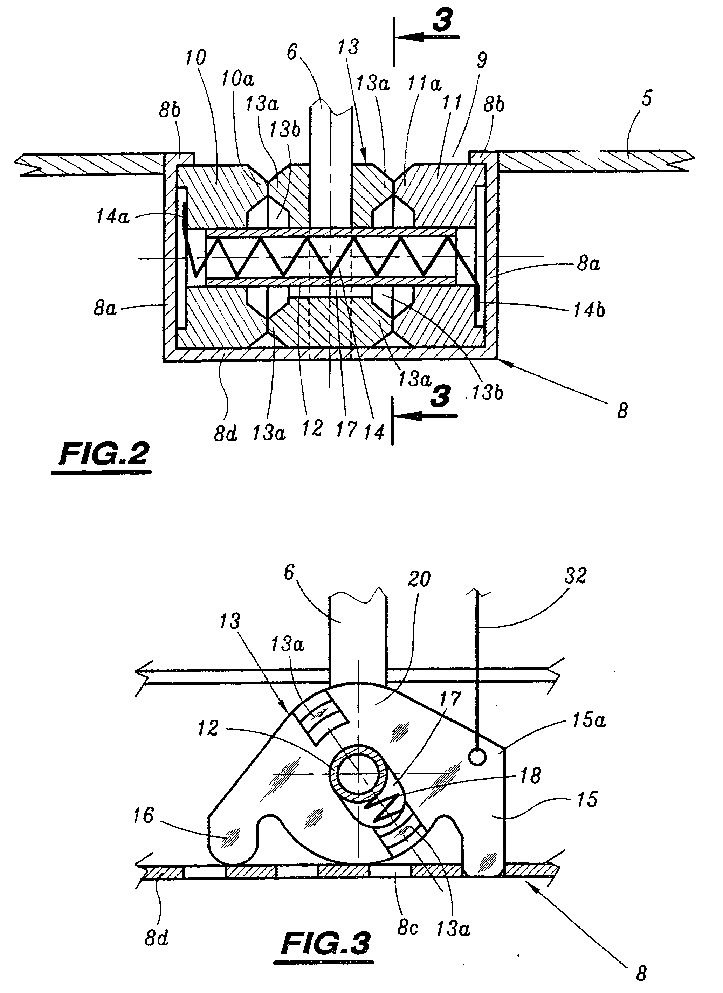

En se reportant maintenant aux Figs. 2 à 5, on va décrire, les moyens d'ancrage montés à coulissement dans les profilés 8 et les moyens d'immobilisation en position longitudinale de ce siège 1 sur le plancher 5 du véhicule automobile.

Sur ces figures, on a représenté un pied du siège 1, comme par exemple un pied avant 6, et dans ce qui suit, on se bornera à décrire les moyens d'ancrage et les moyens d'immobilisation de ce pied 6, l'autre pied avant 6 et les pieds arrière 7 étant pourvus des mêmes moyens dans les modes de réalisation représentés sur les figures.

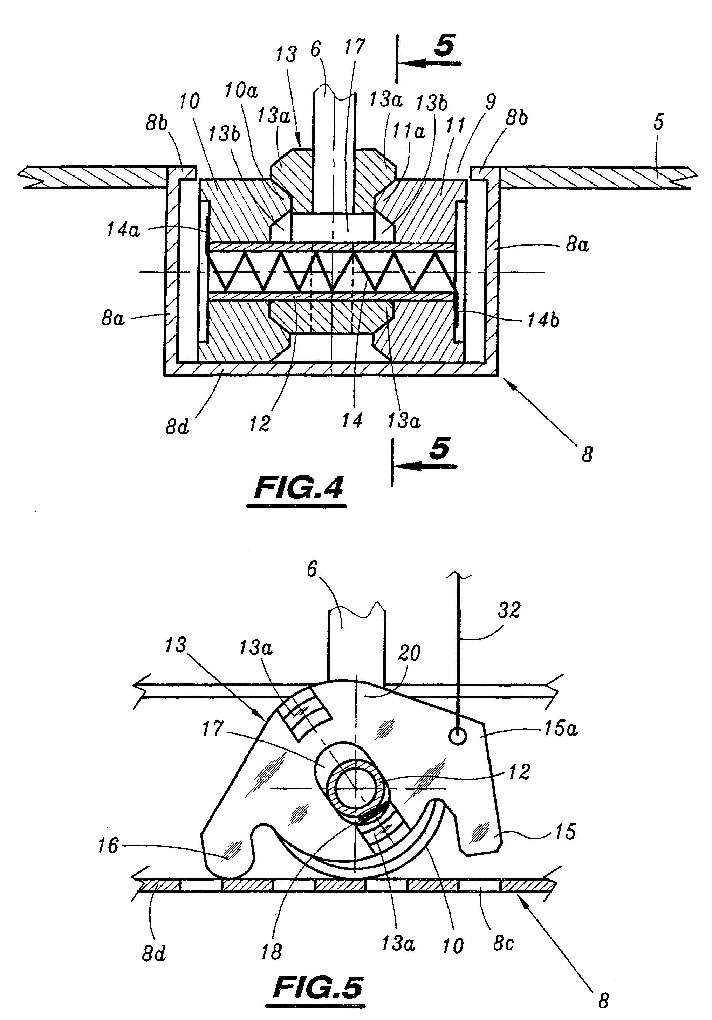

Comme représenté sur les Figs. 2 et 4, les profilés 8 présentent chacun la forme générale d'un U dont les extrémités des branches latérales 8a comportent des bords de butée 8b en regard délimitant entre eux une fente 9.

Les moyens d'ancrage du siège 1 dans les profilés 8 sont formés par deux galets, respectivement 10 et 11, disposés symétriquement par rapport au pied 6 et qui coopère avec les faces internes du profilé 8 pour permettre le coulissement du siège 1 par rotation des galets 10 et 11 à l'intérieur dudit profilé 8.

Pour cela, les galets 10 et 11 sont solidaires en rotation d'un axe transversal 12 qui est lui même monté, par exemple, libre en rotation sur l'extrémité du pied 6.

Entre les galets 10 et 11 est interposé un organe 13 formant came monté pivotant sous l'action des moyens de commande 30 sur l'axe transversal 12 supportant lesdits galets 10 et 11.

Cet organe 13 formant came est déplaçable entre une première position active (Figs. 2 et 3) d'écartement des galets 10 et 11, dans laquelle ces galets 10 et 11 sont en prise avec le profilé 8 et une seconde position escamotée (Figs. 4 et 5) permettant le rapprochement de ces galets 10 et 11 et dans laquelle lesdits galets 10 et 11 peuvent être extraits du profilé 8, comme on le verra ultérieurement.

Les galets 10 et 11 sont rappelés en position de rapprochement par un organe élastique 14.

Ainsi que représenté sur les Figs. 2 et 4, l'axe transversal 12 est formé par un tube et l'organe de rappel élastique est constitué par un ressort 14 disposé à l'intérieur de ce tube et dont une première extrémité 14a est reliée au galet 10 et dont une seconde extrémité 14b est reliée au galet 11.

Les moyens d'immobilisation en position longitudinale du siège 1 sur le plancher 5 du véhicule automobile sont formés par un doigt 15 porté par l'organe 13 formant came, comme représenté à la Fig.3.

Pour cela, l'organe 13 formant came comporte une partie centrale 20 de forme cylindrique à la périphérie de laquelle est ménagé un prolongement 15a qui comporte à sa partie inférieure le doigt 15 dirigé vers le fond 8d du profilé 8.

Ce doigt 15 est adapté pour coopérer avec des moyens 8c de butée complémentaires, ménagés dans le fond 8d du profilé 8.

Ces moyens 8c de butée sont formés par des encoches ménagées dans le fond 8d et régulièrement réparties sur toute la longueur du profilé 8 selon les différentes positions de réglage longitudinal du siège 1 à obtenir.

L'organe 13 formant came comporte une butée d'appui 16 disposée à la périphérie de la partie centrale 20 de cet organe 13 formant came et opposée au doigt 15, ainsi que représenté à la Fig.3.

Cette butée 16 est destinée à coopérer avec le fond 8d du profilé 8 pour permettre le basculement de l'organe 13 formant came sur l'axe transversal 12 lors de l'action des moyens de commande 30, ainsi que représenté à la Fig. 5.

Pour cela, la partie centrale 20 de l'organe 13 formant came comporte un orifice axial 17 de forme oblongue pour le passage de l'axe transversal 12 et pour permettre le déplacement dudit organe 13 formant came entre la première position active d'écartement des galets 10 et 11 et dans laquelle le doigt 15 coopère avec les moyens 8c de butée et la seconde position escamotée permettant le rapprochement de ces galets 10 et 11 et dans laquelle le doigt 15 est dégagé des moyens 8c de butée.

L'organe 13 formant came est rappelé dans la position active par un organe élastique 18 constitué par exemple par un ressort interposé entre l'axe 12 et la paroi de l'orifice 17.

La butée d'appui 16 possède une largeur supérieure à la largeur des moyens 8c de butée de façon à empêcher que cette butée d'appui 16 s'engage dans lesdits moyens 8c de butée.

Selon une variante, la butée d'appui 16 est constituée en deux parties disposées symétriquement par rapport à l'axe longitudinal du profilé 8 de telle manière que chacune desdites parties formant ladite butée d'appui 16 coopère avec le fond 8d de part et d'autre des moyens 8c de butée pour permettre le basculement de l'organe 13 formant came.

Comme représenté plus particulièrement sur les Fig. 2 et 4, les faces en regard de l'organe 13 formant came et des galets 10 et 11 comportent des parties en relief, respectivement 13a, 10a et 11a, coopérant les unes avec les autres pour maintenir les galets 10 et 11 en position d'écartement dans la première position de cet organe 13 formant came.

Dans l'exemple de réalisation représenté sur les figures, les parties en relief respectivement 10a et 11a des galets 10 et 11 sont formées par une couronne ménagée sur la face interne respectivement des galets 10 et 11 et chaque face de l'organe 13 formant came comporte deux parties en relief 13 opposées par rapport à l'axe transversal 12.

Ces deux parties en relief sont situées dans un plan perpendiculaire passant par le centre de l'axe 12 à un plan fictif passant par le centre dudit axe 12 et le point de contact de la butée d'appui 16 avec le fond 8d du profilé 8.

De plus, chaque face de l'organe 13 formant came en regard des galets 10 et 11 comporte au moins une partie en creux 13b adaptée pour coopérer avec les parties en relief, respectivement 10a et 11a de ces galets 10 et 11, pour le rapprochement desdits galets 10 et 11 dans la seconde position de l'organe 13 formant came.

Ainsi que représenté à la Fig. 1, les moyens 30 de commande sont formés par une poignée 31 disposée par exemple au-dessous de l'assise 2 du siège 1 et reliée à chaque organe 13 formant came des pieds 6 et 7 par un câble 32.

Dans le mode de réalisation représenté à la Fig.1, les organes 13 formant came sont disposés de manière identique par rapport aux pieds 6 et 7, c'est à dire que les doigts 15 sont tous disposés vers l'arrière du siège 1.

Selon une variante, les doigts 15 peuvent tous être disposés vers l'avant du siège 1.

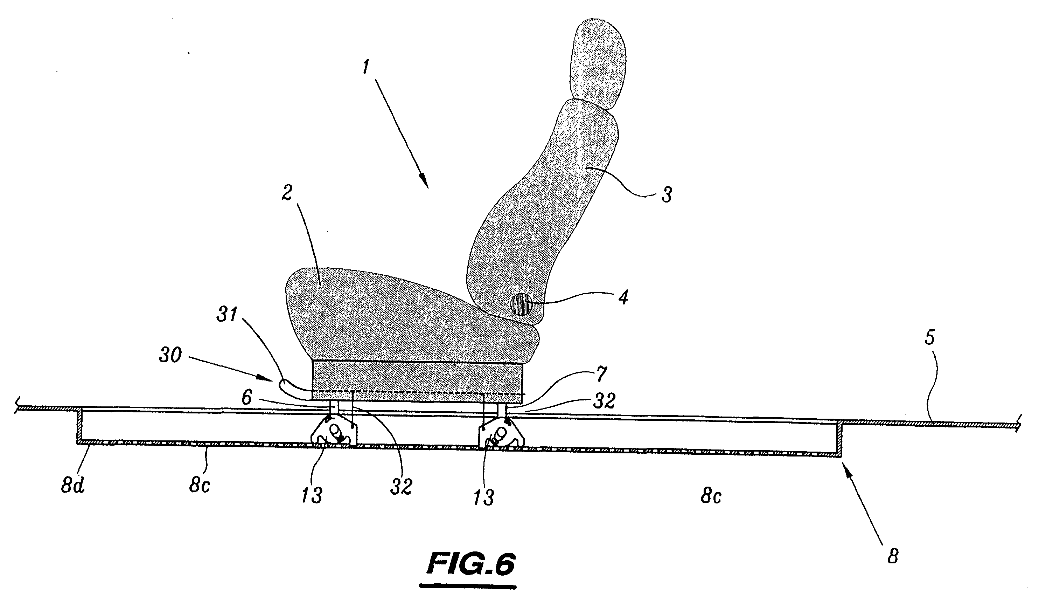

Selon une autre variante, représentée à la Fig. 6, les doigts 15 des organes 13 formant came des pieds avant 6 peuvent être disposés vers l'arrière du siège et les doigts 15 des organes 13 formant came des pieds arrière 7 peuvent être dirigés vers l'avant de ce siège 1 ou inversement.

Le coulissement du siège 1 dans les profilés 8 est réalisé de la façon suivante.

L'occupant du siège 1 agit sur la poignée 31 ce qui a pour effet d'exercer une traction sur chaque organe 13 formant came par l'intermédiaire du câble 32 correspondant.

Lors de cette traction, la butée 16 vient en appui sur le fond 8d du profilé 8 ce qui entraîne le basculement de l'organe 13 formant came autour de l'axe transversal 12 à l'encontre de la force de rappel exercée par l'organe élastique 18.

Au cours du basculement de l'organe 13 formant came, le doigt 15 se dégage des moyens 8c de butée ménagés dans le fond 8d du profilé 8.

En maintenant la poignée 31, l'occupant du siège 1 peut faire coulisser ce siège 1 par l'intermédiaire des galets 10 et 11 qui roulent dans les profilés 8 de manière à amener ledit siège 1 dans la position recherchée par son occupant.

Dans cette position, les parties en relief, respectivement 10a et 11a des galets 10 et 11 sont en contact avec les parties en relief 13a de l'organe 13 formant came de façon à maintenir ces galets 10 et 11 en position active à l'intérieur du profilé 8.

Lorsque l'occupant du siège 1 a trouvé la position idéale, il relâche la poignée 31 provoquant ainsi, sous l'action de l'organe de rappel 18, le basculement des organes 13 formant came pour que le doigt 15 de chacun desdits organes 13 s'engage à nouveau dans les moyens 8c de butée.

L'extraction du siège 1 de l'intérieur de l'habitacle du véhicule automobile est réalisée de la façon suivante.

La personne désirant effectuer cette opération exerce une traction plus prononcée sur la poignée 31 de telle manière que chaque organe 13 formant came bascule autour de l'axe transversal 12 grâce à la butée 16 qui est en appui sur le fond 8d du profilé 8.

Dès que l'organe 13 formant came est dans sa position haute, les parties en relief 10a et 11a des galets 10 et 11 se trouvent positionnées en regard des parties en creux 13b de l'organe 13 formant came si bien que, sous l'action de l'organe de rappel élastique 14, ces galets 10 et 11 se rapprochent l'un de l'autre, comme représenté à la Fig.4.

Dans cette position, la distance séparant les faces latérales externes des galets 10 et 11 est inférieure à la largeur de la fente 9 des profilés 8 ce qui permet l'extraction du siège 1 de ces profilés 8.

La remise en place du siège 1 dans les profilés 8 est effectuée en procédant de manière inverse.

L'ensemble des organes 13 formant came peut être pourvu d'un doigt 15 d'immobilisation dans le profilé 8 correspondant ou certains de ces organes 13 formant came peuvent être pourvus d'un doigt 15.

Selon une variante non représentée, la largeur de la fente 9 de chaque profilé 8 peut être inférieure à la distance séparant les faces latérales externes des galets 10 et 11 en position escamotée ce qui permet d'augmenter les surfaces de roulement entre les profilés 8 et les galets 10 et 11.

Dans ce cas, pour permettre l'extraction dû siège 1 dans la position escamotée des galets 10 et 11, chaque profilé 8 peut être pourvu de deux encoches permettant ainsi le passage des galets 10 et 11 dans cette position escamotée.

La distance séparant les deux encoches de chaque profilé 8 correspond à l'écartement entre les pieds avant 6 et les pieds arrière 7 du siège.

Grâce à l'agencement de siège selon l'invention, le siège 1 est réversible, c'est à dire qu'il peut être orienté dans le sens de déplacement du véhicule ou dans le sens inverse.

Il va de soit que différents modes de réalisation de ces différents moyens peuvent être envisagés.

## Revendications

1. Agencement de siège (1) amovible et réglable en position longitudinale dans un habitacle de véhicule automobile, le siège (1) comportant des pieds de support (6; 7), munis, à une extrémité, de moyens (10 ; 11) d'ancrage montés à coulissement dans des profilés complémentaires de guidage (8) reliés au plancher (5) du véhicule et dont certains au moins comportent des moyens (13 ; 15) d'immobilisation en position longitudinale du siège (1) sur le plancher (5), déplaçables sous l'action de moyens (30) de commande portés par le siège (1) entre des positions active d'immobilisation dudit siège (1) et escamotée de réglage en position de celui-ci, **caractérisé en ce que** les moyens (10 ; 11) d'ancrage sont extractibles des profilés (8) pour permettre un retrait du siège (1) et **en ce que** les moyens d'ancrage sont formés par deux galets (10 ; 11) disposés symétriquement par rapport au pied (6 ; 7) et entre lesquels est interposé un organe (13) formant came monté pivotant sous l'action des moyens (30) de commande sur un axe transversal (12) supportant lesdits galets (10 ; 11) et déplaçable entre une première position active d'écartement des galets (10 ; 11) et une seconde position escamotée permettant le rapprochement de ces galets (10; 11) sous l'action d'un organe de rappel élastique (14).

2. Agencement selon la revendication 1, **caractérisé en ce que** les moyens d'immobilisation sont formés par un doigt (15) porté par l'organe (13) formant came et adapté pour coopérer avec des moyens (8c) de butée complémentaires ménagés dans le fond (8d) du profilé (8) correspondant.

3. Agencement selon la revendication 1 ou 2, **caractérisé en ce que** l'organe (13) formant came comporte une butée d'appui (16) dans le fond (8d) du profilé (8) correspondant et un orifice axial (17) de forme oblongue de passage de l'axe transversal (12) permettant le déplacement de cet organe (13) formant came entre lesdites positions à l'encontre d'un organe élastique (18) interposé entre l'axe transversal (12) et la paroi dudit orifice (17).

4. Agencement selon l'une quelconque des revendications précédentes, **caractérisé en ce que** les faces en regard de l'organe (13) formant came et des galets (10 ; 11) comportent des parties en relief (10a ; 11a ; 13a) coopérant les unes avec les autres pour maintenir les galets (10 ; 11) en position d'écartement dans la première position de cet organe (13) formant came et chaque face dudit organe (13) formant came en regard des galets (10 ; 11) comporte au moins une partie en creux (13b) adaptée pour coopérer avec les parties en relief (10a ; 11a) de ces galets (10 ; 11) pour le rapprochement desdits galets (10 ; 11) dans la seconde position de l'organe (13) formant came.

5. Agencement selon l'une quelconque des revendications précédentes, **caractérisé en ce que** les profilés (8) présentent chacun la forme générale d'un U dont les extrémités des branches latérales (8a) comportent des bords de butée (8b) en regard délimitant entre eux une fente (9) de passage des pieds (6 ; 7) et des galets (10 ; 11) en position rapprochée.

6. Agencement selon l'une quelconque des revendications précédentes, **caractérisé en ce que** l'axe transversal (12) est formé par un tube et l'organe de rappel élastique maintenant les galets (10 ; 11) en position rapprochée est formé par un ressort (14) disposé à l'intérieur du tube et dont chaque extrémité (14a ; 14b) est reliée à un desdits galets (10 ; 11).

## Patentansprüche

1. Anordnung für einen ausnehmbaren und in Längsrichtung verstellbaren Sitz (1) im Innenraum eines Kraftfahrzeuges, wobei der Sitz (1) Stützfüße (6; 7) umfasst, die an einem Ende mit Verankerungsmitteln (10, 11) versehen sind, welche auf Kulissen in komplementären, auf dem Boden (5) des Wagens befestigten Führungsprofilen (8) montiert sind und von welchen wenigstens ein paar bestimmte Stützfüße Arretiermittel (13; 15) zur Längsverstellung des Sitzes (1) auf dem Boden (5) aufweisen, die unter der Einwirkung von am Sitz befindlichen Betätigungsmitteln (30) zwischen wirksamen Arretierpositionen des Sitzes (1) und eingezogener Position zum Verstellen desselben umstellbar sind, **dadurch gekennzeichnet, dass** die Verankerungsmittel (10; 11) aus den Profilen (8) herausziehbar sind, um ein Herausnehmen des Sitzes (1) zu ermöglichen, und dass die Verankerungsmittel aus zwei Rollen (10; 11) gebildet sind, welche symmetrisch in Bezug auf den Stützfuß (10; 11) angeordnet sind, und zwischen denen eine Klauenvorrichtung (13) angeordnet ist, welche unter der Einwirkung der Betätigungsmittel (30) um eine die Rollen (10; 11) tragende Querachse (12) schwenkbar und zwischen einer ersten wirksamen beabstandeten Stellung der Rollen (10; 11) zueinander und einer zweiten zusammengezogenen Stellung, die eine Annäherung dieser Rollen (10; 11) untereinander unter der Einwirkung eines elastischen Rückstellmittels (14) ermöglicht, umstellbar ausgebildet ist.

2. Anordnung nach Anspruch 1, **dadurch gekennzeichnet, dass** die Arretiermittel durch eine Klaue (15) gebildet sind, welche sich an der Klauenvorrichtung (13) befindet, und welche so ausgebildet ist, dass sie mit komplementären Einrast- und Anschlagmitteln (8c) zusammenwirkt, die auf dem Boden (8d) des korrespondierenden Profils (8) eingebracht sind.

3. Anordnung nach Anspruch 1 oder 2, **dadurch gekennzeichnet, dass** die Klauenvorrichtung (13) eine Stütznocke (16) zu dem Boden (8d) des korrespondierenden Profils (8) und eine axiale Öffnung (17) länglicher Ausbildung zur Durchführung der Querachse (12) aufweist, welche die Verstellung der Klauenvorrichtung (13) zwischen den genannten Stellungen gegenüber einem elastischen Rückstellmittel (18) ermöglicht, welches zwischen der Querachse (12) und der Wand der Öffnung (17) angeordnet ist.

4. Anordnung nach einem der vorhergehenden Ansprüche, **dadurch gekennzeichnet, dass** die gegenüberstehenden Stirnflächen der Klauenvorrichtung (13) und der Rollen (10; 11) hervorstehende Teilbereiche (10a; 11a; 13a) aufweisen, welche untereinander zusammenwirken, um die Rollen (10; 11) in einer beabstandeten Stellung in einer ersten Position zu dieser Klauenvorrichtung (13) zu halten, und dass jede Stirnseite dieser Klauenvorrichtung (13) in Bezug auf die Rollen (10; 11) wenigstens eine Vertiefung (13b) aufweist, welche so ausgebildet ist, dass sie mit den hervorstehenden Teilbereichen (10a; 11a) dieser Rollen (10; 11) so zusammenwirkt, um die Annäherung dieser Rollen (10; 11) untereinander in der zweiten Position der Klauenvorrichtung (13) zu ermöglichen.

5. Anordnung nach einem der vorhergehenden Ansprüche, **dadurch gekennzeichnet, dass** jedes der Profile (8) die allgemeine Form eines U aufweist, dessen Seitenschenkel (8a) mit gegenüberstehenden Anschlagkanten (8b) versehen sind, welche zwischen sich einen Schlitz (9) zur Duchführung der Stützfüße (6; 7) und der Rollen (10; 11) im zusammengeschobenen Zustand abgrenzen.

6. Anordnung nach einem der vorhergehenden Ansprüche, **dadurch gekennzeichnet, dass** die Querachse (12) aus einem Rohr gebildet ist, und dass das elastische Rückstellmittel, welches die Rollen (10; 11) im zusammengezogenen Zustand hält, durch eine innerhalb des Rohres angeordnete Feder (14) gebildet ist, und dass jedes Federende (14a; 14b) an einer der Rollen (10; 11) befestigt ist.

## Claims

1. A removable seat (1) whose longitudinal position in an automotive vehicle passenger compartment can be adjusted, the seat (1) including support legs (6; 7) provided at one end with anchor means (10; 11) adapted to slide in complementary guide sections (8) connected to the floor (5) of the vehicle and at least some of which include means (13; 15) for immobilising the seat (1) longitudinally on the floor (5) adapted to be moved by operating means (30) carried by the seat (1) between an active position for immobilising said seat (1) and a retracted position for adjusting its position, which seat is **characterised in that** the anchor means (10; 11) can be extracted from the sections (8) to remove the seat (1) and **in that** the anchor means take the form of two rollers (10; 11) disposed symmetrically with respect to the leg (6; 7) and between which there is a cam member (13) adapted to be turned by the operating means (30) on a transverse shaft (12) supporting said rollers (10; 11) and to be moved between a first position of active separation of the rollers (10; 11) and a second, retracted position allowing the rollers (10; 11) to be moved towards each other by a return spring member (14).

2. A seat according to claim 1, **characterised in that** the immobilising means take the form of a finger (15) carried by the cam member (13) and adapted to co-operate with complementary abutment means (8c) in the bottom (8d) of the corresponding section (8).

3. A seat according to claim 1 or claim 2, **characterised in that** the cam member (13) includes an abutment (16) adapted to bear on the bottom (8d) of the corresponding section (8) and an oblong axial orifice (17) through which the transverse shaft (12) passes to allow movement of the cam member (13) between said positions against the action of a spring member (18) disposed between the transverse shaft (12) and the wall of said orifice (17).

4. A seat according to any preceding claim, **characterised in that** the facing faces of the cam member (13) and the rollers (10; 11) have raised portions (10a; 11a; 13a) co-operating with each other to hold the rollers (10; 11) apart in the first position of the cam member (13) and each face of said cam member (13) facing the rollers (10; 11) has at least one recessed portion (13b) adapted to co-operate with the raised portions (10a; 11a) of the rollers (10; 11) to allow said rollers (10; 11) to move towards each other in the second position of the cam member (13).

5. A seat according to any preceding claim, **characterised in that** the sections (8) are each generally U-shaped and the ends of their lateral branches (8a) have facing abutment rims (8b) delimiting between them a slot (9) through which can pass the legs (6; 7) and the rollers (10; 11) in the close together position.

6. A seat according to any preceding claim, **characterised in that** the transverse shaft (12) is a tube and the return spring member for holding the rollers (10; 11) in the close together position is a spring (14) inside. the tube and each end (14a; 14b) of which is connected to one of said rollers (10; 11).
